# EUROPÄISCHE PATENTSCHRIFT

(11) **EP 2 469 107 B1**
(45) Veröffentlichungstag und Bekanntmachung des Hinweises auf die Patenterteilung: **20.02.2013**
(21) Anmeldenummer: 10015878.1
(22) Anmeldetag: 21.12.2010
(51) Int. Cl.: F16C 3/03, F16C 29/02, F16C 33/20

(54) **Gleithülse**
Gliding bush
Douille de glissement

(43) Veröffentlichungstag der Anmeldung: 27.06.2012
(73) Patentinhaber: ThyssenKrupp Presta Aktiengesellschaft, 9492 Eschen (LI)
(72) Erfinder: Eltner, Frank, 6800 Feldkirch (AT)
(74) Vertreter: Hofmann, Ralf U.

(56) Entgegenhaltungen:
- EP-A2- 1 526 296
- DE-A1- 3 202 669
- DE-A1-102008 049 825
- US-A- 5 383 811
- US-A- 5 821 204

## Beschreibung

Die vorliegende Erfindung betrifft eine teleskopierbare Lenkspindel mit einer inneren Spindel und einer äußeren Spindel, die koaxial zueinander angeordnet sind und zur Drehmomentübertragung einen von der Kreisform abweichenden Querschnitt aufweisen, wobei zwischen der äußeren Spindel und der inneren Spindel ein Zwischenraum vorgesehen ist, in dem eine aus einem thermoplastischen Kunststoff bestehenden oder einen solchen enthaltenden Gleithülse vorgesehen ist, welche eine innere Oberfläche und eine äußere Oberfläche aufweist.

Gleithülsen werden zur Reibungsminderung und/oder zum Spielausgleich beispielsweise zwischen gegeneinander verdrehbaren und teleskopierbaren Mantelrohren oder zwischen einer äußeren und einer inneren Welle einer teleskopierbaren Lenkspindel eingesetzt.

Teleskopierbare Lenkspindeln weisen zwei koaxiale Wellenteile auf, die einen unrunden Querschnitt aufweisen und die axial verschieblich sind, aber ein Drehmoment übertragen können. Wesentlich bei Lenkspindeln ist die Spielfreiheit bei der Drehmomentübertragung, aber auch eine möglichst geringe Reibung. Teleskopierbare Lenkspindeln werden in Kraftfahrzeugen zwischen dem Lenkgetriebe und der im allgemeinen verstellbaren Lenksäule eingesetzt. Sie sollen sowohl geringfügige Änderungen des Abstandes zwischen dem Lenkgetriebe und der Lenksäule kompensieren, wie sie beispielsweise auf Grund dynamischer Belastungen im Fahrbetrieb durch Verwinden der Karosserie oder durch Bewegungen des Lenkgetriebes in einer Gummilagerung entstehen und/oder eine Längenverstellbarkeit der Lenkspindel ermöglichen.

Der gattungsbildende Stand der Technik wird in EP916564B1 gezeigt. Hier ist eine teleskopierbare Lenkspindel mit unrundem Profil der zusammenwirkenden Wellenteile dargestellt. Zwischen den beiden Wellenteilen ist eine Kunststoffhülse vorgesehen, deren Aufgabe es ist, die Gleiteigenschaften dauerhaltbar zu verbessern. Insbesondere soll die Neigung zu einem sogenannten Stick-Slip-Effekt verringert werden. Dieser Effekt bewirkt bei kleinen Bewegungen auf Grund der Differenz zwischen Haftreibung und Gleitreibung eine Kraftspitze in Axialrichtung, die auch zu einer Geräuschentwicklung führt, die in Kraftfahrzeuglenkungen nicht toleriert wird. Dies gelingt bei der teleskopierbaren Lenkspindel nach dem Stand der Technik nicht dauerhaft zufriedenstellend.

Die DE102008049825A1 schlägt als Verbesserung eine gezielte Aufrauung der Gleithülse vor.

Weitere teleskopierbare Lenkspindeln der eingangs genannten Art gehen aus der US 5,383,811 A und DE 32 02 669 A1 hervor.

In der US 5,821,204 A ist ein Axiallager beschrieben, das aus einem thermoplastischen Kunststoff besteht und PEEK, PTFE, Kohlenstofffasern und Graphit enthält. Als Schmiermittel dient ein Schmieröl und das Graphit ist in Form von expandiertem Graphit ausgebildet und weist eine Ölabsorptionsfähigkeit von 70 bis 500 ml/100g auf.

Die EP 1 526 296 A2 beschreibt einen dreidimensionalen Formkörper für gleitende Beanspruchung, wobei das Gleitschichtmaterial PEEK oder PPS oder PA als Matrix bildende Kunststoffkomponente aufweist. Weiters sind Kohlenstofffasern und Graphit enthalten. Der Einsatz von TiO₂ wird gegenüber PTFE bevorzugt. Ein zusätzlicher Schmierstoff ist nicht vorgesehen.

Die EP1840193A2 offenbart eine Schiebeverbindung, bei der ein Schmierstoff mit einer kinematischen Viskosität im Bereich von 1500 bis 13000 mm²/s bei 40°C eingesetzt wird. Weiters wird offenbart, dass die Kontaktflächen mit einer Kunstharzschicht überzogen sein können.

Die EP1840399A1 offenbart ebenfalls eine Schiebeverbindung, bei der ein Schmierstoff mit einer dynamischen Viskosität im Bereich von 10 bis 210 mm²/s bei 25°C vorgesehen ist, wobei der Schmierstoff ein Druckadditiv enthält. Auf die Kontaktflächen ist eine Oberflächenschicht, beispielsweise aus einem Polytetrafluorethylen (PTFE) aufgebracht.

Die in diesen Schriften vorgeschlagenen Verbesserungen sind jedoch kostenintensiv und aufwändig und benötigen teilweise zusätzliche Arbeitsschritte und sind nicht immer dauerhaltbar.

Es ist deshalb Aufgabe der vorliegenden Erfindung, eine Gleithülse bzw. eine teleskopierbare Lenkspindel zu schaffen, die dauerhaft verbesserte Gleiteigenschaften aufweist, wobei der Aufwand für die Herstellung der Einzelteile verringert ist.

Erfindungsgemäß gelingt dies durch eine Lenkspindel mit den Merkmalen des Anspruchs 1.

In den Unteransprüchen sind vorteilhafte Weiterbildungen der Erfindung beschrieben.

Bei einer erfindungsgemäßen teleskopierbaren Lenkspindel mit einer inneren Spindel und einer äußeren Spindel, die koaxial zueinander und verschiebbar zueinander angeordnet sind und zur Drehmomentübertragung einen von der Kreisform abweichenden Querschnitt aufweisen, wobei zwischen der äußeren Spindel und der inneren Spindel ein Zwischenraum zur Aufnahme der aus einem thermoplastischen Kunststoff bestehenden oder einen solchen enthaltenden Gleithülse vorgesehen ist, welche eine innere Oberfläche und eine äußere Oberfläche aufweist, ist die Gleithülse aus einer Mischung aus dem Werkstoff PEEK und zusätzlich dem Werkstoff PTFE mit einem prozentualen Volumenanteil im Bereich von 7% bis 13% und zusätzlich dem Werkstoff Graphit mit einem Volumenanteil von 7% bis 13% und zusätzlich Kohlenstofffasern mit einem Volumenanteil von 25% bis 35% gebildet, wobei weitere Werkstoffe in der Mischung enthalten sein können. Die Kombination der Werkstoffe erhöht die Dauerhaltbarkeit der Gleithülse und der damit gebildeten Schiebeverbindung.

Die Verwendung einer erfindungsgemäßen Gleithülse hat den Vorteil dass eine Schiebeverbindung zwischen den Bauelementen dargestellt ist, die sehr dauerhaltbar ist und den Stick-Slip-Effekt nachhaltig reduziert.

Unter PEEK ist der Kunststoff Polyetheretherketon oder ein Abkömmling aus der Gruppe der Polyaryletherketone zu verstehen. Allerdings ist Polyetheretherketon bevorzugt als PEEK zu verwenden. Unter PTFE ist, wie bereits oben genannt Polytetrafluorethylen zu verstehen. Der Begriff Kohlenstofffaser ist auch unter den Begriffen Carbon fibre oder Kohlefaser im Stand der Technik bekannt. Die Beimischung von mindestens einem der Werkstoffe PTFE, Graphit und oder Kohlenstofffasern führt zu einer Absenkung der Haftreibung bei Erhalt der Lebensdauer. Für den Fachmann bestand der unerwartete Effekt darin, dass sich der Unterschied zwischen der Haft - und der Gleitreibung ebenfalls verringern lässt.

Es hat sich als besonders vorteilhaft erwiesen die Gleithülse aus einer Mischung auszubilden, die PEEK-Werkstoff sowie einen 10% Volumenanteil PTFE und einen 10% Volumenanteil Graphit und einen 30% Volumenanteil Kohlenstofffasern enthält oder aus diesen Werkstoffen insgesamt besteht.

Erfindungsgemäß ist in die Gleitpaarung zwischen der Gleithülse und der inneren und/oder äußeren Spindel ein Schmierstoff eingebracht. Als geeigneter Schmierstoff hat sich dabei ein Schmiermittel mit einer dynamischen Viskosität im Bereich von 2000 mPa*s bis 4000 mPa^{*}s bei einer Temperatur von 25°C und im Bereich von 600 mPa*s bis 1200 mPa^{*}s bei einer Temperatur von 80°C und im Bereich von 150000 mPa^{*}s bis 220000 mPa*s bei einer Temperatur von -20°C im Gleitkontakt zwischen der Gleithülse und der äußeren Spindel erwiesen. Die dynamische Viskosität ist begrifflich gleichzusetzen mit dem Begriff Scherviskosität.

Besonders günstig hat sich der Einsatz eines Schmiermittels mit einer dynamischen Viskosität im Bereich von 2500 mPa*s bis 3500 mPa^{*}s bei einer Temperatur von 25°C und im Bereich von 800 mPa*s bis 1000 mPa^{*}s bei einer Temperatur von 80°C und im Bereich von 190000 mPa^{*}s bis 200000 mPa^{*}s bei einer Temperatur von -20°C erwiesen.

Völlig unerwartet hat sich gezeigt, dass ein Schmiermittel mit einer derartig niedrigen dynamischen Viskosität geeignet ist, einen Beitrag zu leisten, den Sprung zwischen der Haftreibung und der Gleitreibung zu minimieren.

Als Schmiermittel kann vorteilhafterweise ein Grundöl aus synthetischem Kohlenwasserstoff gemischt mit einem Verdickungsmittel (Seife) einer Kalzium-Komplex-Seife eingesetzt werden. Einem solchen Schmiermittel kann auch ein Festschmierstoff zugesetzt sein, beispielsweise PTFE. Als Schmiermittel kann beispielsweise auch ein Grundöl aus Perfluorpolyether mit Verdickungsmittel PTFE eingesetzt werden.

Um die Haftung des Schmiermittels im Bereich des Gleitkontaktes zu verbessern ist der Gleitpartner aus Stahl mit einer Oberflächenrauigkeit von Ra (=arithmetischer Mittelrauwert) im Bereich von 0,2µm bis 0,6µm geeignet. Entsprechend ist mit Vorzug die äußere Spindel und/oder die innere Spindel aus dem Werkstoff Stahl dargestellt, wobei an ihrer der Hülse zugewandten Oberfläche Rauigkeiten Ra im Bereich von 0,2µm bis 0,6µm, bevorzugt im Bereich von 0,4µm, ausgebildet ist.

Die Ra-Werte sind entsprechend der DIN EN ISO 4288 (1998-04), oder dem "Tabellenbuch Metall" vom VERLAG EUROPA LEHRMITTEL, Haan-Gruiten, 43. Auflage 2005, Seite 99 anzusetzen. Die Ra-Zahlenwerte sind als Rauigkeiten im Sinne des arithmetischen Mittelrauwerts mit einer entsprechenden Rautiefe in µm aufzufassen. Beispielsweise Ra=0,4 ist also gleichzusetzen mit Ra=0,4µm.

Zur Verbesserung der Schiebeverbindung wird die Gleithülse an der inneren Spindel oder der äußeren Spindel gegen eine Verschiebung in axialer Richtung festgelegt.

Weitere Einzelheiten der Erfindung werden an einem Ausführungsbeispiel der vorliegenden Erfindung anhand der Zeichnung beschrieben. Es zeigen:
Fig. 1: eine teleskopierbare Lenkspindel in einer Seitenansicht;
Fig. 2: die innere Lenkspindel mit aufgesetzter Gleithülse in einer perspektivischen Darstellung;
Fig. 3: die Lenkspindel gemäß Fig. 1 in einem Längsschnitt von der Seite;
Fig. 4: eine erfindungsgemäße Gleithülse in einer perspektivischen Darstellung;
Fig. 5: eine Lenkspindel in einem Querschnitt durch die äußere Lenkspindel, die Gleithülse und die innere Lenkspindel.

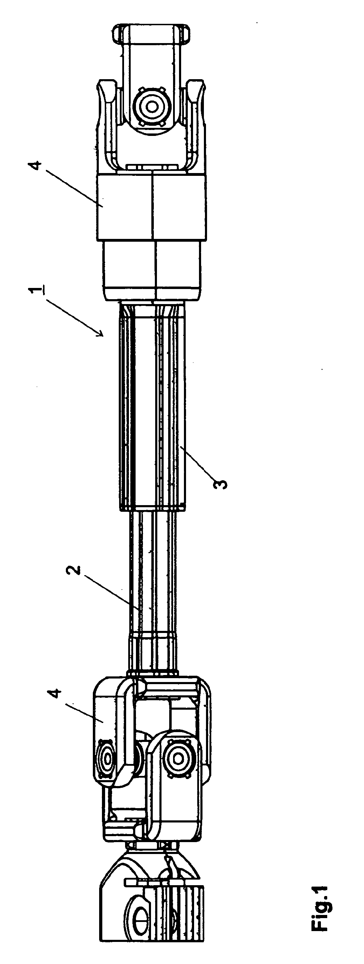

In der Fig. 1 ist eine teleskopierbare Lenkspindel 1 in einer Seitenansicht dargestellt. Die Lenkspindel 1 umfasst eine innere Spindel 2 und eine äußere Spindel 3. Die innere Spindel 2 ist mit einem von der Kreisform abweichenden (=unrunden), in diesem Beispiel etwa kleeblattförmigen Querschnitt versehen. Die äußere Spindel 3 ist rohrförmig ausgestaltet, mit einem inneren freien Querschnitt, der zu der äußeren Umfangskontur der inneren Lenkspindel komplementär ist. Endseitig tragen die innere Spindel 2 und die äußere Spindel 3 jeweils an sich bekannte Anschlussstücke 4 für Kardangelenke zur Verbindung mit einem Lenkgetriebe und einer Lenksäule. Als Gelenk ist im Beispiel ein Universalgelenk dargestellt, bei dem in den Anschlussstücken 4, die als Gabeln ausgebildet sind, die Zapfen eines Gelenkkreuzes (=Zapfenkreuz) drehbar gelagert sind, wobei die Lagerungen der Gabeln orthogonal zueinander versetzt sind. Denkbar und möglich ist es jedoch andere Gelenke oder auch völlig andere Elemente mit den teleskopierbaren Wellenteilen zu verbinden, beispielsweise an einem Ende direkt ein Ritzel für den Eingriff in eine Lenkgetriebe.

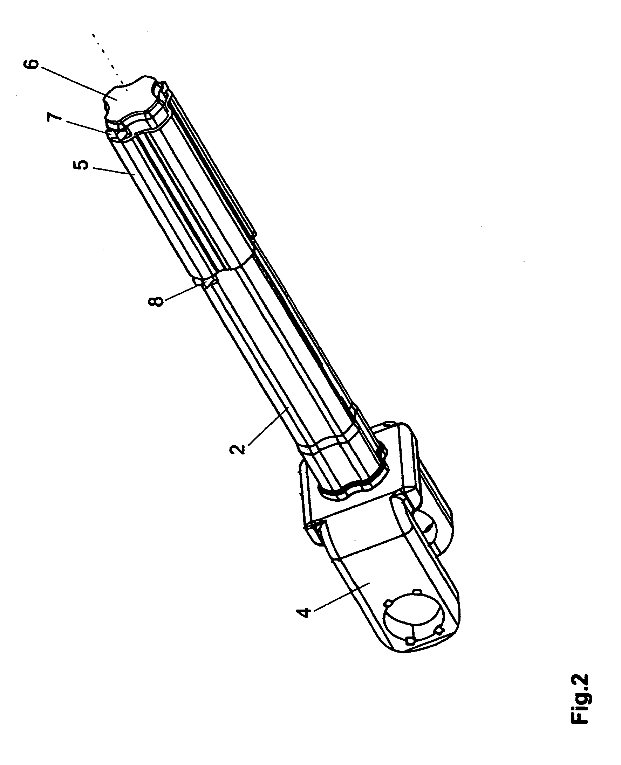

Die Fig. 2 zeigt die innere Lenkspindel 2 in einer perspektivischen Darstellung. Die Lenkspindel 2 trägt hier eine Gleithülse 5, die in der Nähe eines freien Endes 6 der inneren Spindel 2 auf die Außenkontur der Spindel 2 aufgesetzt und in Axialrichtung durch Rastnasen 7, 8 gesichert ist.

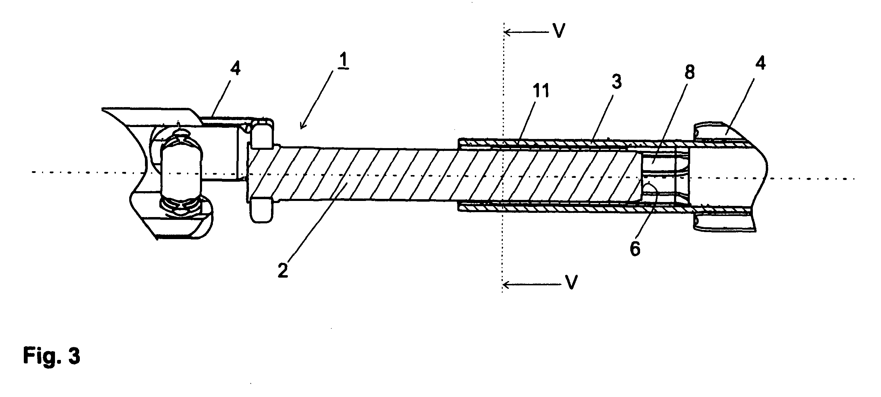

Die Fig. 3 zeigt die Lenkspindel 1 aus der Fig. 1 in einem Längsschnitt. Die innere Spindel 2 ist aus Vollmaterial gefertigt. Sie greift über etwa 3/4 der Länge eines inneren Freiraums 8 in die Innenkontur der äußeren Spindel 3 ein. Etwa mittig in dem Überdeckungsbereich zwischen der inneren Spindel 2 und der äußeren Spindel 3 ist die Gleithülse 5 angeordnet. Das freie Ende 6 der inneren Lenkspindel 2 befindet sich in einem Abstand von dem Ende des Freiraums 8.

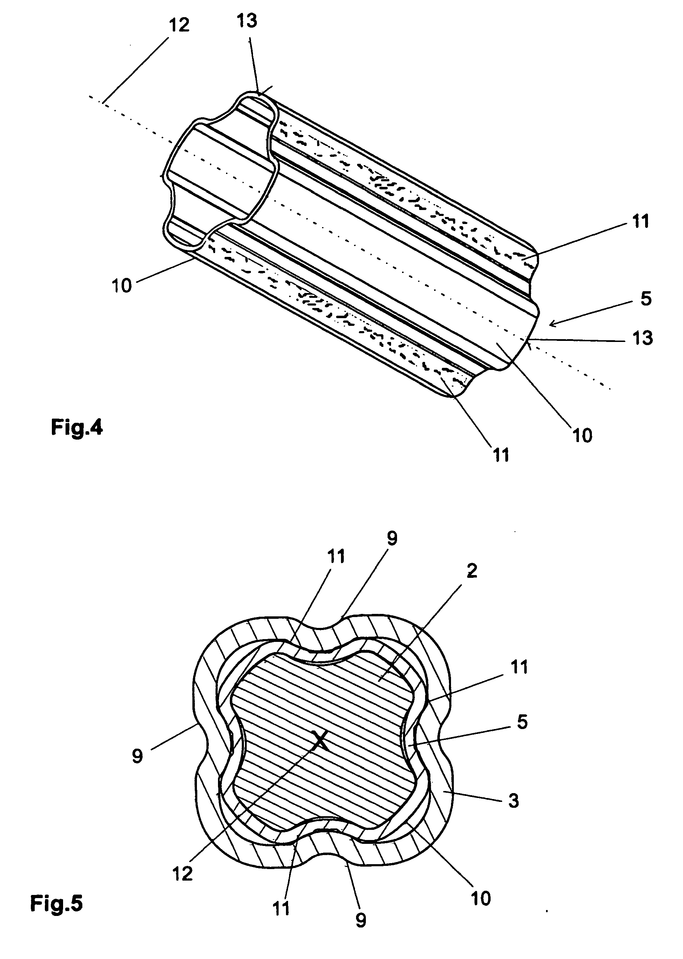

Die Fig. 4 zeigt die Gleithülse 5 in einer perspektivischen Ansicht. Die Gleithülse 5 weist einen Querschnitt auf, der der Kontur, im Ausführungsbeispiel ist dies eine Kontur in Kleeblattform, der inneren Spindel 2 und der äußeren Spindel 3 etwa entspricht.

Die Gleithülse 5 ist als Bauteil mit gleichförmigen Querschnitt und zwei parallelen, zu der Mittenachse 12 senkrecht orientierten Stirnflächen 13 ausgebildet. Die Gleithülse 5 weist an ihrer Außenseite eine Oberfläche 10 auf. Zumindest auf einem Teil der Oberfläche 10 ist ein Schmiermittel 11 aufgetragen. Bevorzugt ist der gesamte Teil der Oberfläche 10, der im eingebauten Zustand mit der der Gleithülse zugewandten Oberfläche (=innere Oberfläche) der äußeren Spindel 3 in Kontakt steht, mit dem Schmiermittel überzogen. Durch die Oberflächenrauigkeiten in der Gleithülse 5 wird das Schmiermittel 11 auch nach Einführen der inneren Spindel 2 mit der darauf angeordneten Hülse 5 in den Hohlraum der äußeren Spindel 3 im Kontaktbereich gehalten.

Die Fig. 5 zeigt einen Querschnitt durch die Lenkspindel aus Fig. 1 und Fig. 3 entlang einer Linie V-V aus Fig. 3. Die äußere Spindel 3 ist koaxial zu der inneren Spindel 2 und der Gleithülse 5 angeordnet. In besonderen Profilbereichen 9 weist die äußere Spindel 3 eine zu der inneren Spindel 2 komplementäre Form auf. Im montierten Zustand stehen die Bereiche, die im Betrieb ein Drehmoment übertragen, in Kontakt mit den mit Schmiermittel 11 versehenen Bereichen der Gleithülse 5. In den übrigen Bereichen ist mit Vorzug kein oder nur ein unwesentlicher Kontakt zwischen der äußeren Spindel 3 und der Gleithülse 5 gegeben. Hier ist ein Schmiermittelauftrag auf der Gleithülse 5 möglich aber nicht erforderlich.

Im späteren Betrieb ist es möglich, die Lenkspindel 1 mit den Anschlussstücken 4 über die Kardangelenke einerseits mit einer Lenksäule drehfest zu verbinden andererseits mit der Eingangswelle eines Lenkgetriebes drehfest zu verbinden. Karosseriebewegungen führen dann zu einer Axialbewegung der Kardangelenke aufeinander zu oder voneinander weg, so dass eine Teleskopbewegung der inneren Spindel 2 gegenüber der äußeren Spindel 3 erforderlich wird. Die Gleithülse 5 ist, zumindest im Wesentlichen, unbeweglich gegenüber der inneren Spindel 2 festgelegt. Sie führt also ebenfalls eine Teleskopbewegung gegenüber der äußeren Spindel 3 durch. Die mit Schmiermittel 11 versehenen Bereiche sind dabei in Anlage an die innere Oberfläche der äußeren Spindel 3 gebracht. Der sogenannte Stick-Slip-Effekt tritt dann stets bei Beginn der Verschiebung ein. Hier erfolgt ein Wechsel von der Haftreibung in die Gleitreibung, der zu dem unerwünschten Stick-Slip-Effekt führt. Durch die erfindungsgemäße Auswahl des Werkstoffs der Gleithülse 5 kann der Stick-Slip-Effekt verringert werden. Eine weitere Verbesserung wird durch den Auftrag des erfindungsgemäßen Schmiermittels auf die zueinander bewegten Kontaktflächen zwischen Gleithülse 5 und der inneren Oberfläche der äußeren Spindel 3 erzielt. Die Auswahl eines Stahlwerkstoffs für die äußere Spindel, wobei die innere Oberfläche, zumindest im Kontaktbereich, eine Rauhigkeit von Ra im Bereich von 0,2µm bis 0,6µm, besonders bevorzugt 0,4µm, aufweist, verringert den Stick-Slip-Effekt noch weiter.

Die Erfindung umfasst auch den umgekehrten Fall, bei dem auf die Gleithülse an Bereichen, die an ihrer inneren Fläche angeordnet sind, Schmiermittel aufgetragen wird. Entsprechend wird die Gleithülse in die äußere Spindel 3 eingeführt und anschließend mit Schmiermittel versehen. Die Gleithülse wird in diesem Fall mit Vorteil axial gegen eine Verschiebung gegenüber der äußeren Spindel festgelegt, während die axiale Verschiebung zwischen Gleithülse 5 und innerer Spindel 2 zugelassen wird.

Für die Erfindung ist es nicht erforderlich, die Hülse gegenüber einer der beiden Wellen in Verschieberichtung (= Teleskoprichtung) festzulegen, auch wenn das nicht zu bevorzugen ist.

Mit der Erfindung ist es zudem möglich eine sehr hohe Lebensdauer der Schiebeverbindung mit einer sehr hohen Anzahl von Relativverschiebungen darzustellen, wobei die Axialkraftkomponente des Kraftunterschieds beim Übergang zwischen der Haftreibung und der Gleitreibung weniger als 10N innerhalb der Verschiebezeit von 0,01 Sekunden beträgt.

### Legende zu den Hinweisziffern

- 1: Lenkspindel
- 2: Innere Spindel
- 3: Äußere Spindel
- 4: Anschlußstück für Kardangelenk
- 5: Gleithülse
- 6: Freies Ende
- 7: Rastnase
- 8: Rastnase
- 9: Profilbereich
- 10: Oberflächenbereich
- 11: Schmiermittel
- 12: Mittenachse
- 13: Stirnflächen

## Patentansprüche

1. Teleskopierbare Lenkspindel (1) mit einer inneren Spindel (2) und einer äußeren Spindel (3), die koaxial zueinander angeordnet sind und zur Drehmomentübertragung einen von der Kreisform abweichenden Querschnitt aufweisen, wobei zwischen der äußeren Spindel (3) und der inneren Spindel (2) ein Zwischenraum vorgesehen ist, in dem eine aus einem thermoplastischen Kunststoff bestehenden oder einen solchen enthaltenden Gleithülse (5) angeordnet ist, welche eine innere Oberfläche und eine äußere Oberfläche aufweist, **dadurch gekennzeichnet, dass** die Gleithülse aus einer Mischung besteht, die den Werkstoff PEEK und zusätzlich die Werkstoffe PTFE mit einem Volumenanteil im Bereich von 7% bis 13% und Graphit mit einem Volumenanteil von 7% bis 13% und Kohlenstofffasern mit einem Volumenanteil von 25% bis 35% enthält und dass zusätzlich ein Schmiermittel (11) mit einer dynamischen Viskosität im Bereich von 2000 mPa*s bis 4000 mPa*s bei einer Temperatur von 25°C und im Bereich von 600 mPa*s bis 1200 mPa*s bei einer Temperatur von 80°C und im Bereich von 150000 mPa*s bis 220000 mPa*s bei einer Temperatur von - 20°C im Gleitkontakt zwischen der Gleithülse (5) und der äußeren und/oder inneren Spindel (3, 2) angeordnet ist.

2. Teleskopierbare Lenkspindel nach Anspruch 1, **dadurch gekennzeichnet, dass** die Gleithülse (5) im Spritzguss- oder Extrusionsverfahren hergestellt ist.

3. Teleskopierbare Lenkspindel nach Anspruch 1 oder 2, **dadurch gekennzeichnet, dass** das Schmiermittel (11) eine dynamischen Viskosität im Bereich von 2500 mPa*s bis 3500 mPa*s bei einer Temperatur von 25°C und im Bereich von 800 mPa*s bis 1000 mPa*s bei einer Temperatur von 80°C und im Bereich von 190000 mPa*s bis 200000 mPa*s bei einer Temperatur von -20°C aufweist.

4. Teleskopierbare Lenkspindel nach einem der Ansprüche 1 bis 3, **dadurch gekennzeichnet, dass** die äußere Spindel (3) aus dem Werkstoff Stahl besteht und an ihrer der Hülse zugewandten Oberfläche Rauigkeiten Ra im Bereich von 0,2µm bis 0,6µm, bevorzugt im Bereich von 0,4µm, aufweist.

5. Teleskopierbare Lenkspindel nach einem der Ansprüche 1 bis 4, **dadurch gekennzeichnet, dass** die innere Spindel (2) aus dem Werkstoff Stahl besteht und an ihrer der Hülse zugewandten Oberfläche Rauigkeiten Ra im Bereich von 0,2 µm bis 0,6 µm, bevorzugt im Bereich von 0,4 µm, aufweist.

6. Teleskopierbare Lenkspindel nach einem der Ansprüche 1 bis 5, **dadurch gekennzeichnet, dass** die Gleithülse (5) an der inneren Spindel (2) gegen eine Verschiebung in axialer Richtung festgelegt ist

7. Teleskopierbare Lenkspindel nach einem der Ansprüche 1 bis 5, **dadurch gekennzeichnet, dass** die Gleithülse (5) an der äußeren Spindel (3) gegen eine Verschiebung in axialer Richtung festgelegt ist.

## Claims

1. Telescopable steering spindle (1) having an inner spindle (2) and an outer spindle (3) which are arranged coaxially with respect to one another and for torque transmission have a cross-section deviating from the circular shape, there being provided between the outer spindle (3) and the inner spindle (2) an intermediate space in which is arranged a sliding bush (5) composed of or containing a thermoplastic and having an inner surface and an outer surface, **characterised in that** the sliding bush is composed of a mixture containing the material PEEK and additionally the materials PTFE with a volume fraction in the range of 7% to 13% and graphite with a volume fraction of 7% to 13% and carbon fibres with a volume fraction of 25% to 35%, and **in that** additionally a lubricant (11) with a dynamic viscosity in the range of 2000 mPa*s to 4000 mPa*s at a temperature of 25°C and in the range of 600 mPa*s to 1200 mPa*s at a temperature of 80°C and in the range of 150000 mPa*s to 220000 mPa*s at a temperature of -20°C is arranged in sliding contact between the sliding bush (5) and the outer and/or inner spindle (3, 2).

2. Telescopable steering spindle according to Claim 1, **characterised in that** the sliding bush (5) is produced by the injection-moulding or extrusion process.

3. Telescopable steering spindle according to Claim 1 or 2, **characterised in that** the lubricant (11) has a dynamic viscosity in the range of 2500 mPa*s to 3500 mPa*s at a temperature of 25°C and in the range of 800 mPa*s to 1000 mPa*s at a temperature of 80°C and in the range of 190000 mPa*s to 200000 mPa*s at a temperature of -20°C.

4. Telescopable steering spindle according to one of Claims 1 to 3, **characterised in that** the outer spindle (3) is composed of the material steel and at its surface facing the bush has roughnesses Ra in the range of 0.2 µm to 0.6 µm, preferably in the region of 0.4 µm.

5. Telescopable steering spindle according to one of Claims 1 to 4, **characterised in that** the inner spindle (2) is composed of the material steel and at its surface facing the bush has roughnesses Ra in the range of 0.2 µm to 0.6 µm, preferably in the region of 0.4 µm.

6. Telescopable steering spindle according to one of Claims 1 to 5, **characterised in that** the sliding bush (5) is fixed on the inner spindle (2) against displacement in the axial direction.

7. Telescopable steering spindle according to one of Claims 1 to 5, **characterised in that** the sliding bush (5) is fixed on the outer spindle (3) against displacement in the axial direction.

## Revendications

1. Arbre de direction (1) télescopique avec un arbre intérieur (2) et un arbre extérieur (3) qui sont disposés coaxialement l'une à l'autre et présentent pour la transmission de couple une section transversale qui diffère de la forme circulaire, entre l'arbre extérieur (3) et l'arbre intérieur (2) étant prévu un espace intermédiaire, dans lequel une douille de glissement (5) se composant d'un thermoplastique ou contenant un tel matériau est disposée, laquelle présente une surface intérieure et une surface extérieure, **caractérisé en ce que** la douille de glissement se compose d'un mélange qui contient le matériau PEEK et en outre les matériaux PTFE avec une part de volume comprise dans la plage entre 7 et 13 % et graphite avec une part de volume de 7 à 13 % et des fibres de carbone avec une part de volume de 25 à 35 % et **en ce qu'**en outre, un lubrifiant (11) avec une viscosité dynamique dans la plage de 2 000 mPa*s à 4 000 mPa*s à une température de 25°C et dans la plage de 600 mPa*s à 1 200 mPa*s à une température de 80°C et dans la plage de 150 000 mPa*s à 220 000 mPa*s à une température de -20°C est disposé en contact de glissement entre la douille de glissement (5) et l'arbre extérieur et/ou intérieur (3, 2).

2. Arbre de direction télescopique selon la revendication 1, **caractérisé en ce que** la douille de glissement (5) est fabriquée dans le procédé de moulage par injection ou d'extrusion.

3. Arbre de direction télescopique selon la revendication 1 ou 2, **caractérisé en ce que** le lubrifiant (11) présente une viscosité dynamique dans la plage de 2 500 mPa*s à 3 500 mPa*s à une température de 25°C et dans la plage de 800 mPa*s à 1 000 mPa*s à une température de 80°C et dans la plage de 190 000 mPa*s à 200 000 mPa*s à une température de -20°C.

4. Arbre de direction télescopique selon l'une quelconque des revendications 1 à 3, **caractérisée en ce que** l'arbre extérieur (3) se compose du matériau acier et présente sur sa surface tournée vers la douille des rugosités Ra dans la plage de 0,2 µm à 0,6 µm, de préférence dans la plage de 0,4 µm.

5. Arbre de direction télescopique selon l'une quelconque des revendications 1 à 4, **caractérisée en ce que** l'arbre intérieur (2) se compose du matériau acier et présente sur sa surface tournée vers la douille des rugosités Ra dans la plage de 0,2 µm à 0,6 µm, de préférence dans la plage de 0,4 µm.

6. Arbre de direction télescopique selon l'une quelconque des revendications 1 à 5, **caractérisée en ce que** la douille de glissement (5) est fixée sur l'arbre intérieur (2) contre tout déplacement dans le sens axial.

7. Arbre de direction télescopique selon l'une quelconque des revendications 1 à 5, **caractérisée en ce que** la douille de glissement (5) est fixée sur l'arbre extérieur (3) contre tout déplacement dans le sens axial.
